# EUROPÄISCHE PATENTSCHRIFT

(11) **EP 0 925 531 B1**
(45) Veröffentlichungstag und Bekanntmachung des Hinweises auf die Patenterteilung: **14.11.2001**
(21) Anmeldenummer: 97929191.1
(22) Anmeldetag: 16.06.1997
(51) Int. Cl.: G05B 19/408

(54) **VERFAHREN UND VORRICHTUNG ZUR STEUERUNG DER BEWEGUNG EINES TRÄGERS**
METHOD AND DEVICE FOR BEAM MOVEMENT CONTROL
TECHNIQUE ET DISPOSITIF DE COMMANDE DE MOUVEMENT D'UNE POUTRE

(30) Priorität: 05.09.1996 DE 19636102
(43) Veröffentlichungstag der Anmeldung: 30.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHWAAR, Michael, D-09232 Hartmannsdorf (DE); KARCZEWSKI, Zenon, D-01069 Dresden (DE); KORIATH, Hans-Joachim, D-07747 Jena (DE)
(74) Vertreter: Grünecker, Kinkeldey, Stockmair & Schwanhäusser Anwaltssozietät
(86) Internationale Anmeldenummer: EP9703127
(87) Internationale Veröffentlichungsnummer: WO9810339

(56) Entgegenhaltungen:
- EP-A- 0 120 198
- US-A- 4 580 229
- ROBOTERSYSTEME, Bd. 2, Nr. 2, 1986, Seiten 73-81, XP002039523 P. ROJEK ET AL: "Schnelle Koordinatentransformation und Führungsgrössenerzeugung für bahngeführte Industrieroboter "
- PROCEEDINGS OF THE AMERICAN CONTROL CONFERENCE, BOSTON, JUNE 26 - 28, 1991, Bd. 2, 26.Juni 1991, INSTITUTE OF ELECTRICAL AND ELECTRONICS ENGINEERS, Seiten 2057-2058, XP000272103 DURFEE W K ET AL: "REAL-TIME CONTROL OF THE MIT VEHICLE EMULATION SYSTEM"

## Beschreibung

Die Erfindung betrifft ein Verfahren zur Bewegung eines Trägers relativ zu der Basis mit einer Zentralsteuereinheit zur Generierung von Soll-Zustandsgrößen in den Koordinaten eines orthogonalen Koordinatensystems der Basis zur Bewegung des Trägers und mit Bewegungsvorrichtungen zur Bewegung des Trägers, wobei die Freiheitsgrade der Bewegungsvorrichtungen ein nicht-orthogonales Koordinatensystem definieren. Weiterhin betrifft die Erfindung eine Vorrichtung zur Steuerung der Bewegung eines Trägers relativ zu einer Basis, sowie eine Werkzeugmaschine mit einer Bearbeitungsvorrichtung.

Derartige Verfahren bzw. Vorrichtungen eignen sich insbesondere für Werkzeugmaschinen mit nicht-orthogonal zueinanderstehenden Bewegungsachsen, wobei das Werkstück an der Basis festgelegt wird und eine Bearbeitungsvorrichtung an dem Träger vorgesehen ist. Die zur Herstellung des Werkstücks erforderlichen Relativbewegungen werden normalerweise durch ein Bewegen des Trägers gegenüber der feststehenden Basis durchgeführt, es ist jedoch auch möglich, in einigen oder allen Bewegungsrichtungen eine Zustellbewegung mit der Basis auszuführen. Vorteilhafterweise werden derartige Vorrichtungen bzw. Verfahren für Werkzeugmaschinen mit nicht orthogonal zueinanderstehenden Vorschubachsen und geschlossenem kinematischem Aufbau eingesetzt. Insbesondere eignen sich die Vorrichtungen bzw. Verfahren für den Einsatz bei Hexapod-Bearbeitungszentren, bei denen der Träger über sechs in ihrer Länge verstellbaren Streben an der Basis angelenkt ist. Die Bewegung des Trägers in allen Raumfreiheitsgraden erfolgt dabei durch eine gesteuerte Verstellung der Länge der Streben, wobei durch die Längenänderungen entlang der sechs Linearachsen ein nicht-orthogonales Koordinatensystem definiert wird. Weiterhin sind derartige Vorrichtungen bzw. Verfahren für Handhabungsvorrichtungen zum Positionieren bzw. Transportieren von Werkstücken geeignet. Anstelle längenverstellbarer Streben können auch solche mit fester Länge eingesetzt werden, wobei dann beispielsweise deren Fußpunkte verschoben werden. Auch eine Kombination mit Drehachsen ist möglich.

Bei Bewegungsvorrichtungen werden üblicherweise die durchzuführenden Bewegungen auf ein feststehendes orthogonales Koordinatensystem bezogen, das den Bewegungsfreiheitsgraden der einzelnen Bewegungsvorrichtungen entspricht. Zur Herstellung eines Werkstückes in einer Werkzeugmaschine wird dieses Koordinatensystem vor Beginn der Bearbeitung auf einen Referenzpunkt des Werkstücks genullt. Dies erlaubt ein einfach vollstellbares Programmieren der durchzuführenden Bewegung sowie einen relativ geringen Berechnungsaufwand während des Programmablaufes in der Maschine.

Im Zuge neuerer Entwicklungen auf dem Gebiet der Werkzeugmaschinen wurden in jüngster Zeit Maschinen mit nicht-orthogonalen Vorschubachsen vorgeschlagen, die sich gegenüber herkömmlichen Werkzeugmaschinen mit orthogonalen Vorschubachsen durch eine erheblich verbesserte Steifigkeit der Maschinenstruktur sowie eine relativ hohe Lageunabhängigkeit ihres Verformungsverhaltens auszeichnen. Um mit derartigen Maschinen beispielsweise eine geradlinige Bewegung auszuführen, müssen in der Regel mehrere oder sämtliche Bewegungsvorrichtungen synchron und mit interpolierter Geschwindigkeit arbeiten. Die Bewegungsfreiheitsgrade der Bewegungsvorrichtungen bedingen ein nicht-orthogonales Koordinatensystem. Daher sind die für eine bezüglich eines ortsfesten orthogonalen Koordinatensystems durchzuführenden Bewegung des Trägers erforderlichen Zustellbewegungen der einzelnen Bewegungsvorrichtungen für einen Programmierer nicht nachvollziehbar. Eine Programmierung in den Bewegungsfreiheitsgraden der einzelnen Bewegungsvorrichtungen ist außerordentlich schwierig.

Es wurde daher bei solchen Werkzeugmaschinen mit numerischer Steuerung bereits vorgeschlagen, im Programmablauf die Lage eines Zielpunktes in Koordinaten eines feststehenden, orthogonalen Koordinatensystems (X, Y, Z, A, B, C) in ein nicht-orthogonales Koordinatensystem (L₁, L₂, L₃, L₄, L₅, L₆) zu transformieren. Beispielsweise ist aus der DE-A1-19522963 eine Steuerung für eine Hexapod-Werkzeugmaschine bekannt, bei der eine Zustellbewegung in einzelne Takte aufgespalten wird, wobei unter Berechnung des Anfangs- und Endpunktes jeden Taktes auf der Grundlage eines Anfangs- und eines Zielpunktes und einer vorgegebenen Taktzeit die erforderlichen Längenänderungen sowie Änderungsgeschwindigkeiten der einzelnen Streben einer Hexapod-Aufhängung ermittelt werden. Eine Erfassung des Ist-Zustandes ist dabei nicht vorgesehen.

Weiterhin ist bekannt, einem solchen Interpolationszyklus eine Lageregelung nachzuschalten, so daß die Regelung in den Koordinaten der Strebenlängen (L₁, L₂, L₃, L₄, L₅, L₆) erfolgt, da dies eine relativ einfache Übergabe der in der Interpolationsrechnung ermittelten Steuergrößen an die Streben ermöglichen würde.

Da das Koordinatensystem der Strebenlängen Lᵢ nicht orthogonal ist, sind die Strebenlängen Lᵢ in der Regel jeweils eine Funktion einer oder mehrerer Koordinaten des Orthogonalsystems (X, Y, Z, A, B, C). Erfolgt die Regelung in den Koordinaten der Strebenlängen, so sind die einzelnen Regelkreise miteinander verkoppelt. Aufgrund nichtlinearer Wechselwirkungen besteht eine Lage- und Richtungsabhängigkeit des dynamischen Verhaltens einer so gesteuerten Werkzeugmaschine. Insbesondere ist es dann nicht möglich, durch entsprechende Parametrierung der Regelkreise die dynamischen Eigenschaften bezüglich der Richtungen des Orthogonalsystems für jede Richtung getrennt voneinander einzustellen. Da die zu jedem einzelnen Regler zugehörigen Regelstrecken im verkoppelten System eine höhere Ordnung besitzen, ist die maximal einstellbare Kreisverstärkung kleiner als bei entkoppelten Regelkreisen. Erfolgte andererseits die Transformation der Koordinaten vor der Interpolation, so wären die Auswirkungen nicht-linearer Interpolationsmethoden nicht mehr beherrschbar.

Ein Regelungsverfahren bzw. eine Regelungsvorrichtung mit den Merkmalen des Oberbegriffs des Patentanspruches 1 bzw. 9 ist aus P. ROJEK ET AL. "Schnelle Koordinatentransformation und Führungsgrößenerzeugung für bahngeführte Industrieroboter", Robotersysteme, Bd. 2, Nr. 2, Springer Verlag 1986, bekannt. Die Regelung erfolgt dort jedoch im nicht-orthogonalen Bereich. Eine Entkopplung der Regelung in den einzelnen orthogonalen Koordinatenachsen ist nicht möglich. Weiterhin ist aus der EP-A-0 120 198 eine Regelungsvorrichtung für einen Industrieroboter bekannt, bei der die Bewegungsregelung teils in Orthogonalkoordinaten, teils in nicht-orthogonalen Koordinaten erfolgt.

Der Erfindung liegt die Aufgabe zugrunde, ein Verfahren bzw. eine Vorrichtung zur Bewegung eines Trägers bzw. einer Werkzeugmaschine anzugeben, mit dem bzw. der bei einem Träger mit nicht orthogonalen Vorschubachsen ein dynamisches Verhalten erzielt wird, das dem eines Trägers mit orthogonal zueinanderstehenden Bewegungsachsen entspricht.

Zur Lösung der obengenannten Aufgabe wird ein Verfahren zur Bewegung eines Trägers relativ zu einer Basis vorgeschlagen, bei dem die Soll-Zustandsgrößen der Bewegung des Trägers in Koordinaten eines orthogonalen Koordinatensystems der Basis vorgegeben werden, die Ist-Zustandsgrößen des Trägers in den Koordinaten eines durch die Freiheitsgrade der Bewegungsvorrichtungen zum Bewegen des Trägers definierten, nicht-orthogonalen Koordinatensystems erfaßt und auf das orthogonale Koordinatensystem transformiert werden, eine Regelung zur Ermittlung von Stellgrößen für die Bewegung des Trägers auf der Grundlage der Soll- und Ist-Zustandsgrößen erfolgt, wobei die Regelung in den orthogonalen Koordinaten der Basis durchgeführt wird, und die Stellgrößen anschließend in Koordinaten des nicht-orthogonalen Koordinatensystems transformiert werden.

Diese Aufgabe wird weiterhin bei der eingangs genannten Vorrichtung dadurch gelöst, daß zwischen der Zentralsteuereinheit und den Bewegungsvorrichtungen eine Recheneinheit geschaltet ist, die ein Transformationsmodul zur Transformation von Ist-Zustandsgrößen des Trägers von nicht orthogonalen Koordinaten in orthogonale Koordinaten, eine Regelvorrichtung zur Ermittlung von Stellgrößen in orthogonale Koordinaten aus den Ist- und Soll-Zustandsgrößen, und ein weiteres Transformationsmodul zur Transformation der ermittelten Stellgrößen in die Koordinaten des nicht-orthogonalen Koordinatensystems aufweist. Hierdurch wird eine Trennung der Regelkreise des orthogonalen Koordinatensystems erzielt, so daß die dynamischen Eigenschaften bezüglich der Achsen des Orthogonalkoordinatensystems unabhängig voneinander eingestellt werden können. Somit wird eine Optimierung der Kreisverstärkung ermöglicht. Zudem wird die Lage- und Richtungsabhängigkeit der dynamischen Eigenschaften konzeptionell beseitigt. Die Nutzung der in numerischen Steuerungen vorhandenen Möglichkeiten zur Kompensation der Trägheit in den einzelnen geregelten Achsen ist daran gebunden, daß das dynamische Verhalten der Achsen nicht lageabhängig ist. Das wird durch die Erfindung erreicht. Somit werden in den orthogonalen Achsen determinierte dynamische Eigenschaften geschaffen, die nunmehr den Einsatz von Kompensationsalgarithmen bei Vorrichtungen mit nicht-orthogonalen Bewegungsachsen ermöglichen.

Vorzugsweise ist für jede Koordinatenrichtung des Orthogonalsystems ein separater Regler vorgesehen, um die dynamischen Eigenschaften durch Parametrierung der einzelnen Regelkreise getrennt voneinander festzulegen.

Vorzugsweise ist neben der Vorrichtung zur Generierung der Soll-Zustandsgrößen ein Antriebsbus-Controller vorgesehen, um die einzelnen Bewegungsvorrichtungen anzusteuern. Dieser Antriebsbus-Controller ist mit der Zentralsteuereinheit über einen Rechnerbus verbunden. Durch die Aufschaltung der Recheneinheit, die die Regelvorrichtung und die Transformationsmodule aufweist, ist es möglich, eine vorhandene numerische Steuerung für eine Maschine mit orthogonalen Bewegungsvorrichtungen mit relativ geringem Änderungsaufwand bei einer Maschine mit nicht-orthogonalen Bewegungsvorrichtung einzusetzen, so daß die Steuervorrichtung in ihrer gesamten Funktion ohne Einschränkungen weiter genutzt werden kann. Ein mit bekannten NC-Werkzeugmaschinen vertrauter Bediener kann hierdurch die Maschine mit nicht-orthogonalen Bewegungsvorrichtungen in der ihm bereits bekannten Weise nutzen. Zudem entfällt die Notwendigkeit der Anpassung von bereits vorhandenen NC-Programmen zur Erzeugung von gewünschten Bewegungsabläufen, wie beispielsweise eines Bearbeitungsprogrammes für eine Werkzeugmaschine oder eines Programmes zur Positionierung eines Werkstückes.

Bei Verwendung eines digitalen Antriebsbuses zu den Bewegungsvorrichtungen wird dieser vorzugsweise als Ringbus ausgebildet, wobei für jeden Arm des Ringbusses an der Recheneinheit eine eigene Schnittstelle vorgesehen wird. Der Bus dient dabei zur Übertragung der Ist-Zustandsgrößen der einzelnen Bewegungvorrichtungen zu der Recheneinheit und zur Übertragung der Stellgrößen an die Bewegungsvorrichtungen.

Mit der ebenfalls vorgeschlagenen Werkzeugmaschine werden die gleichen Vorteile wie mit der obengenannten Vorrichtung erzielt.

Grundsätzlich kann die erfindgungsgemäße Vorrichtung bzw. das erfindungsgemäße Verfahren bei Vorrichtungen mit nicht orthogonal zueinanderstehenden Bewegungsachsen und geschlossenem kinematischem Aufbau eingesetzt werden. Vorzugsweise findet dies Anwendung bei Maschinen mit einer Hexapod-Aufhängung des Trägers an der Basis, wobei das nicht-orthogonale Koordinatensystem des Trägers durch die Achslängen von sechs in ihrer Länge verstellbaren Streben gebildet wird. Genauso können beispielsweise Streben fester Länge verwendet werden, deren Fußpunkte translatorisch oder rotatorisch bewegt werden.

Zur Erhöhung der Regelgenauigkeit bei digitaler Regelung können neben Lagewerten auch Geschwindigkeits- bzw. Kraft-/Momentenwerte mit berücksichtigt werden. Vorzugsweise erfolgt die Ansteuerung der Bewegungsvorrichtungen über Stellgrößen, die den für die Bewegung erforderlichen Momenten der einzelnen Bewegungsvorrichtungen entsprechen. Dies kann beispielsweise über die Einstellung des Stroms eines Motors erfolgen. Grundsätzlich können jedoch auch andere Bewegungsvorrichtungen wie z.B. Hydraulik- oder Pneumatikzylinder eingesetzt werden. Auch der Einsatz von Servomotoren ist möglich. Die Stellgrößen sind dann entsprechend anzupassen.

Weitere vorteilhafte Weiterbildungen der Erfindung sind den Unteransprüchen zu entnehmen.

Im folgenden wird nun die Erfindung anhand von Ausführungsbeispielen unter Bezug auf die Zeichnungen beschrieben. Diese zeigt in:
- Fig. 1: eine Steuervorrichung eines ersten Ausführungsbeispiels bei dem Einsatz in einer Werkzeugmaschine,
- Fig. 2: die Lageregelung in der Steuereinheit,
- Fig. 3: die Gliederung der Steuereinheit, und
- Fig. 4: eine Steuervorrichtung eines zweiten Ausführungsbeispiels.

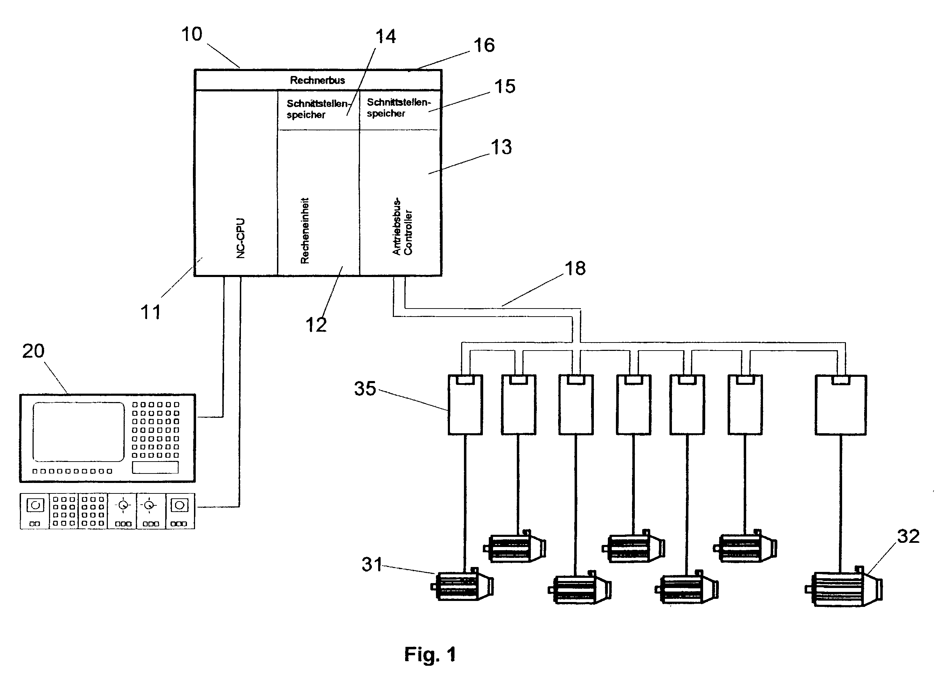

Ein erstes Ausführungsbeispiel wird anhand der Fig. 1 bis 3 beschrieben.

Bei diesem Ausführungsbeispiel wird die Vorrichtung 10 zur Bewegung eines Trägers bei einer Hexapod-Werkzeugmaschine eingesetzt, bei der der Träger über sechs in ihrer Länge verstellbare Streben an einer Basis angelenkt ist. In Fig. 1 sind jedoch nur die Bewegungsvorrichtungen zur Längenverstellung der einzelnen Streben gezeigt, die hier als Elektromotoren 31 mit Steller 35 ausgebildet sind. An dem Träger ist eine Bearbeitungsvorrichtung vorgesehen, deren Hauptspindel durch einen weiteren Motor 32 angetrieben wird. Zur Steuerung des Bewegungsablaufes des Trägers ist weiterhin eine Bedieneinheit 20 vorgesehen, die mit der Vorrichtung 10 gekoppelt ist. Über diese Bedieneinheit kann einerseits ein Ablaufprogramm eingegeben werden und andererseits während des Betriebes der Maschine Einfluß auf den Bewegungsablauf genommen werden. Die Vorrichtung 10 zur Steuerung der Bewegung des Trägers weist eine Vorrichtung zur Generierung von Soll-Zustandsgrößen 11 zur Bewegung des Trägers auf. Diese Vorrichtung 11 ist als NC-Prozessor ausgebildet, der ein über die Bendieneinheit 20 eingebenes Ablaufprogramm speichert, verarbeitet und die für die Bewegung in den verschiedenen Koordinatenrichtungen erforderliche Aufteilung einzelner Arbeitstakte einschließlich der hierfür nötigen Interpolationen in den Koordinatenrichtungen vornimmt. Die Eingabe des Ablaufprogrammes sowie dessen Verarbeitung erfolgt dabei in den Koordinaten eines orthogonalen Koordinatensystems X, Y, Z, A, B, C, das auf einen Referenzpunkt an dem zu bearbeitenden Werkstück bezogen wird. Hierbei werden auch eventuell notwendige Korrekturen des Bewegungsablaufes vorgenommen, um beispielsweise unterschiedliche Längen und Formen des Werkzeuges zu berücksichtigen.

Die Steuervorrichtung 10 ist über einen Antriebsbus 18 mit den einzelnen Bewegungsvorrichtungen, d.h. den Stellern 35 und somit den Motoren 31 verbunden, um zwischen beiden Seiten Daten hin- und her zu übertragen. Der Antriebsbus 18 wird durch einen Antriebsbus-Controller 13 gesteuert, der in der Steuervorrichtung 10 vorgesehen ist. Weiterhin weist die Steuervorrichtung 10 eine Recheneinheit 12 auf, die zwischen den NC-Prozessor 11 und den Antriebsbus-Controller 13 geschaltet ist. Zur Datenübertragung zwischen dem NC-Prozessor 11, dem Antriebsbus-Controller 13 und der Recheneinheit 12 ist ein Rechnerbus vorgesehen. Diese Anordnung ermöglicht es, eine konventionelle NC-Steuerung mit einem NC-Prozessor 11 und einem Antriebsbus-Controller 13 aufzuspalten und um die zusätzliche Recheneinheit 12 zu ergänzen, so daß die Programmstruktur in dem NC-Prozessor 11 allenfalls geringfügig modifiziert werden muß.

Die Recheneinheit 12 wird über den Rechnerbus 16 von dem NC-Prozessor 11 mit Soll-Zustandsgrößen und von dem Antriebsbus-Controller 13 mit Ist-Zustandsgrößen der Bewegung des Trägers versorgt und erzeugt ihrerseits Stellgrößen. Diese werden über den Rechnerbus 16 und durch den Antriebsbus-Controller 13 gesteuert über den Antriebsbus 18 den einzelnen Bewegungsvorrichtungen zugeführt werden. Die zwischen dem NC-Prozessor 11 und der Recheneinheit 12 übertragenen Daten bzw. Signale sind dabei auf das orthogonale Koordinatensystem X, Y, Z, A, B, C des Ablaufprogramms, d.h. auf Werkstückkoordinaten, bezogen, wogegen die zwischen der Recheneinheit 12 und den Bewegungsvorrichtungen ausgetauschten Daten bzw. Signale auf das nicht-orthogonale Koordinatensystem L₁, L₂, L₃, L₄, L₅, L₆ (Lᵢ) der Streben der Hexapod-Aufhängung bezogen sind. Zur Zwischenspeicherung ist an der Recheneinheit 12 sowie an dem Antriebsbus-Controller 13 jeweils ein Schnittstellenspeicher 14, 15 vorgesehen, in dem die zu übertragenden Daten bzw. Signale zwischenzeitlich abgelegt werden.

Die Recheneinheit weist eine Regelvorrichtung 19 zur Regelung der Bewegung des Trägers sowie ein Transformationsmodul 17a zur Transformation von Ist-Zustandsgrößen des Trägers, die durch ein Lagemeßsystem 34 erfaßt werden, in Orthogonalkoordinaten auf. Ein weiteres Transformationsmodul 17b zur Transformation von durch die Regelvorrichtung 19 erzeugten Stellgrößen in Koordinaten des nicht-orthogonalen Koordinatensystems ist ebenfalls in der Recheneinheit 12 angeordnet. Die Regelvorrichtung 19 ist als Sechsfachregler ausgebildet, wobei für jede Koordinate des orthogonalen Koordinatensystems X, Y, Z, A, B, C ein separater Regler vorgesehen ist.

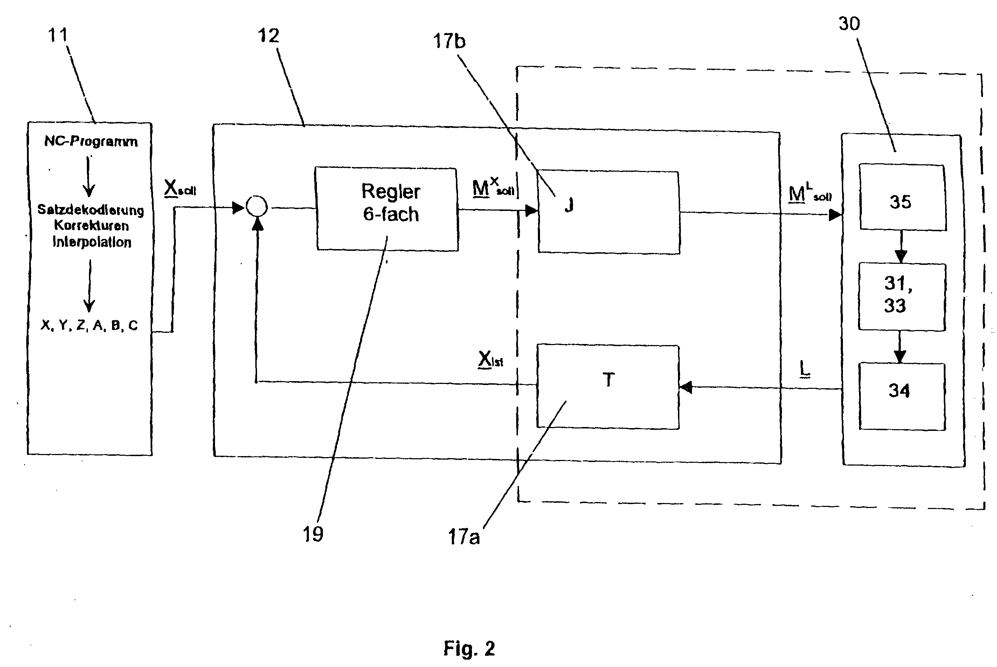

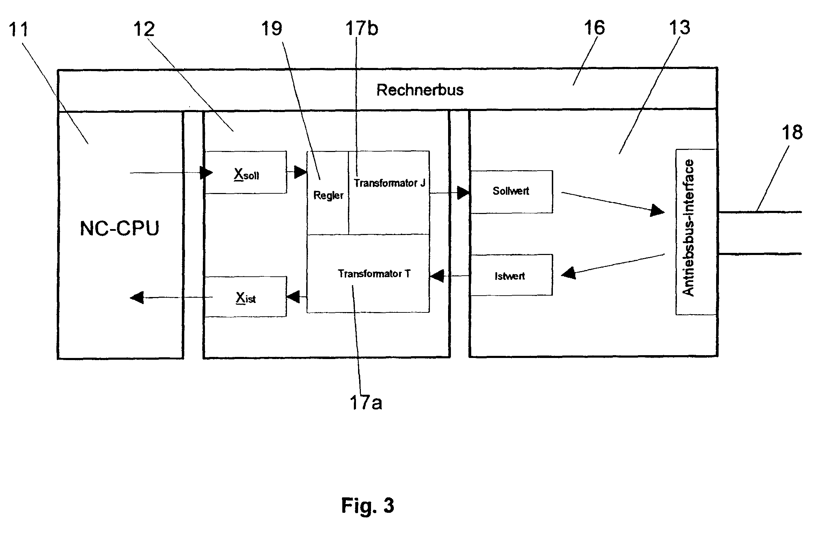

Anhand der Fig. 2 und 3 wird nun die Arbeitsweise des ersten Ausführungsbeispiels beschrieben. Ein Ablaufprogramm zur Steuerung der Bewegung der Arbeitsplattform sowie weiterer Größen eines Bearbeitungsvorganges werden über die Bedieneinheit 20 in herkömmlicher Weise eingegeben und in dem NC-Prozessor abgelegt. In dem NC-Prozessor 11 werden gegebenenfalls notwendige Korrekturen und Interpolationen in den Orthogonalkoordinaten durchgeführt. Die Steuerung des Trägers, d.h. hier der einzelnen Motoren 31, erfolgt von dem NC-Prozessor 11 aus. Während des Ablaufs des Bewegungsprogrammes werden fortlaufend Soll-Zustandsgrößen Xₛₒₗₗ generiert, die taktweise über den Rechnerbus 16 an die Recheneinheit 12 übergeben werden. Die einzelnen Größen werden dabei in dem Schnittstellenspeicher 14 der Recheneinheit 12 zwischenzeitlich abgelegt.

Während des Programmablaufes wird die Bewegung der einzelnen, in Fig. 2 nur schematisch dargestellten Streben 33 der Hexapod-Aufhängung durch ebenfalls nur schematisch dargestellte Lagemeßeinrichtungen 34 erfaßt und über den Antriebsbus 18 an den Antriebsbus-Controller 13 und von dort über den Rechnerbus 16 an die Recheneinheit 12 übertragen. Dabei kann eine Zwischenspeicherung der Ist-Zustandsgrößen in dem Schnittstellenspeicher 15 des Antriebsbus-Controllers 13 erfolgen. Die Erfassung der Ist-Zustandsgrößen erfolgt dabei in den nicht-orthogonalen Koordinaten Lᵢ der Bewegungsfreiheitsgrade der Bewegungsvorrichtungen, d.h. der Achslängenänderungen der einzelnen Streben 33. Alternativ können auch Streben fester Länge eingesetzt werden, deren Fußpunkte translatorisch und/oder rotatorisch bewegt werden. Die Ist-Zustandsgrößen können ebenfalls in dem Schnittstellenspeicher 14 der Recheneinheit 12 abgelegt werden.

Die in den nicht-orthogonalen Koordinaten Lᵢ angelieferten Ist-Zustandsgrößen werden in der Recheneinheit in dem Transformationsmodul 17a auf die Koordinaten des orthogonalen Koordinatensystems transformiert. Anschließend werden die so transformierten Ist-Zustandsgrößen mit den Soll-Zustandsgrößen verglichen und unter Differenzbildung eingangsseitig auf die Regelvorrichtung 19 geschaltet. In der Regelvorrichtung 19 werden momenten-proportionale Stellgrößen in den Orthogonalkoordinaten X, Y, Z, A, B, C erzeugt. Diese werden anschließend in dem Transformationsmodul 17b auf das nicht-orthogonale Koordinatensystem L₁, L₂, L₃, L₄, L₅, L₆ transformiert und gegebenenfalls in dem Schnittstellenspeicher 14 abgelegt, von wo sie dann über den Rechnerbus 16 über den Antriebsbus-Controller 13 und den Antriebsbus 18 den einzelnen Bewegungsvorrichtungen zugeführt werden. Dabei kann wiederum eine Zwischenablage der Stellgrößen in dem Schnittstellenspeicher 15 des Antriebsbus-Controllers 13 erfolgen.

Durch die Anordnung der Regelvorrichtung 19 auf der Seite der Orthogonalkoordinaten kann die Parametrierung in jeder einzelnen Orthogonalkoordinate separat vorgenommen werden. Auch ist es möglich, für jede Koordinate einen eigenen Regler einzusetzen. Die Stellgrößen müssen dabei nicht notwendigerweise momenten-proportional erzeugt werden. Vielmehr können die Antriebsregelkreise auch als Drehzahl- oder Lageregelkreise betrieben werden, wobei die überlagerte Lage- bzw. Drehzahlregelung in der Recheneinheit 12 näherungsweise kompensiert werden. Als Zustandgrößen können neben Lagewerten auch Geschwindigkeits- bzw. Kraft-/Momentenwerte vorgegeben bzw. erfaßt werden.

Der Drehzahl-Sollwert für den Hauptantrieb einer Bearbeitungsvorrichtung am Träger, beispielsweise einer Spindel, kann unverändert von dem NC-Prozessor 11 über den Rechenerbus 16 direkt in den Schnittstellenspeicher 15 des Antriebsbus-Controllers 13 geschrieben werden, von dem aus die Ansteuerung des Hauptantriebes, hier des Motors 32, erfolgt.

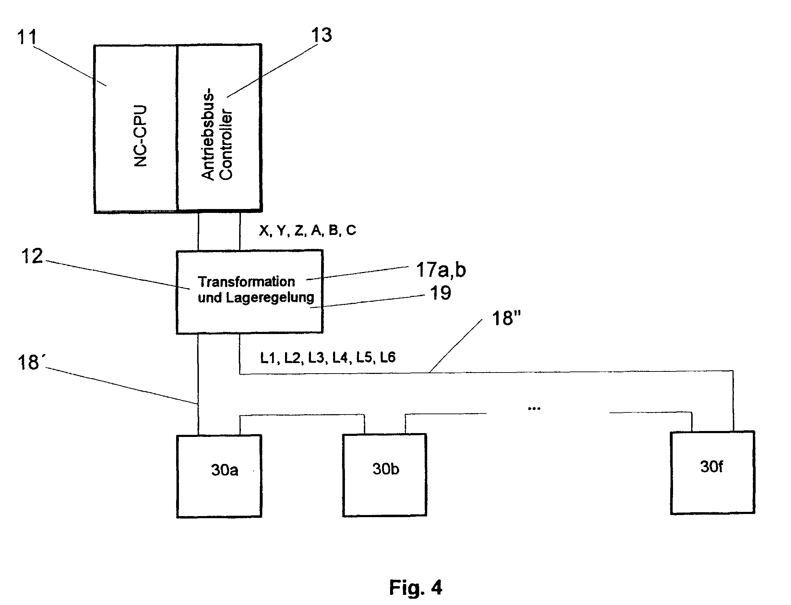

Eine zweite Ausführungsform ist in der Fig. 4 gezeigt. Dort ist im Gegensatz zur ersten Ausführungsform der Antriebsbus-Controller 13 zwischen den NC-Prozessor 11 und die Recheneinheit 12 geschaltet. Diese Anordnung eignet sich besonders bei der Verwendung eines digitalen Antriebsbuses in Ringform. Dieser Ringbus besitzt zwei Arme 18', 18'', die jeweils mit einer Schnittstelle der Recheneinheit 12 verbunden sind. Der Ringbus dient dabei der Übertragung der durch Meßeinrichtungen erfaßten Ist-Zustandsgrößen der Bewegungsvorrichtungen 30a, 30b, 30c, 30d, 30e, 30f an die Recheneinheit 12. Weiterhin überträgt er die Stellgrößen bzw. Signale von der Recheneinheit 12 an die einzelnen Bewegungsvorrichtungen, die wie in dem ersten Beispiel als Motoren 31 mit Steller 35 und Meßsystem 34 ausgebildet sind. Auf dem Ringbus werden die Daten von Steller 35 zu Steller 35 durchgeschoben. Jeder Steller entnimmt seinen Sollwert und speist seinen Istwert ein. Grundsätzlich ist es jedoch auch möglich für die Verstellung der Längen der einzelnen Streben 33 Servomotoren einzusetzen, wobei die Regelvorrichtung 19 entsprechend anzupassen ist. Eine Längenverstellung über Hydraulik- bzw. Pneumatikzylinder ist genauso möglich. Auch das zweite Ausführungsbeispiel ermöglicht es, eine herkömmliche NC-Steuerung für eine Maschine mit orthogonalen Bewegungsvorrichtungen ohne großen Aufwand für eine Maschine mit nicht-orthogonalen Bewegungsvorrichtungen einzusetzen. Beide Ausführungsformen sind nicht auf Hexapodvorrichtungen beschränkt, sondern können bei allen Arten von Bewegungsvorrichtungen mit geschlossenem kinematischen Aufbau mit nicht-orthogonalen Bewegungsrichtungen eingesetzt werden.

## Patentansprüche

1. Verfahren zur Bewegung eines Trägers relativ zu einer Basis durch Bewegungsvorrichtungen, deren Bewegungsfreiheitsgrade ein nicht-orthogonales Koordinatensystem definieren, insbesondere für eine Werkzeugmaschine mit einer Bearbeitungsvorrichtung an dem Träger und einer Werkstückaufnahme an der Basis, bei dem Soll-Zustandsgrößen der Bewegung des Trägers in Koordinaten eines orthogonalen Koordinatensystems (X, Y, Z, A, B, C) der Basis vorgegeben werden, Ist-Zustandsgrößen des Trägers in den Koordinaten des nicht-orthogonalen Koordinatensystems (L₁, L₂, L₃, L₄, L₅, L₆) erfaßt und auf das orthogonale Koordinatensystem (X, Y, Z, A, B, C) transformiert werden,
**dadurch gekennzeichnet, daß**
eine Regelung zur Ermittlung von Stellgrößen in orthogonalen Koordinaten für die Bewegung des Trägers auf der Grundlage der Soll- und Ist-Zustandsgrößen erfolgt, wobei die Regelung in den orthogonalen Koordinaten (X, Y, Z, A, B, C) der Basis durchgeführt wird, und
die Stellgrößen anschließend in Koordinaten des nicht-orthogonalen Koordinatensystems (L₁, L₂, L₃, L₄, L₅, L₆) transformiert werden.

2. Verfahren nach Anspruch 1, **dadurch gekennzeichnet, daß** die Ist- und Soll-Zustandsgrößen sowie die Stellgrößen über einen gemeinsamen Rechnerbus (16) in Adressen einer Rechnereinheit (12), in der die Ermittlung der Stellgrößen erfolgt, geschrieben bzw. von dort gelesen werden.

3. Verfahren nach Anspruch 1 oder 2, **dadurch gekennzeichnet, daß** die Ist-Zustandsgrößen erfaßt und in einen Schnittstellenspeicher (15) eines Antriebsbus-Controllers (13), der die Bewegungsvorrichtungen des Trägers steuert, geschrieben werden, und
die Ist-Zustandsgrößen von dem Schnittstellenspeicher (15) in einen Schnittstellenspeicher (14) der Recheneinheit (12) übertragen werden.

4. Verfahren nach Anspruch 3, **dadurch gekennzeichnet, daß** auf der Grundlage von den in den Adressen des Schnittstellenspeichers (14) der Recheneinheit (12) abgelegten Zustandsgrößen Stellgrößen ermittelt werden, die in weitere Adressen des Schnittstellenspeichers (14) geschrieben werden, und die Stellgrößen von dort an den Schnittstellenspeicher (15) des Antriebsbus-Controllers (13) übertragen werden zur Ansteuerung der Bewegungsvorrichtungen.

5. Verfahren nach einem der Ansprüche 1 bis 3, **dadurch gekennzeichnet, daß** die Ansteuerung der Bewegungsvorrichtungen (31) von der Recheneinheit (12) und die Übertragung von Ist-Zustandsgrößen von den Bewegungsvorrichtungen (31, 35) bzw. dem Träger zur Recheneinheit (12) über einen Ringbus (18', 18") erfolgt.

6. Verfahren nach einem der Ansprüche 1 bis 5, **dadurch gekennzeichnet, daß** die Regelung in jeder Koordinatenrichtung des orthogonalen Koordinatensystems (X, Y, Z, A, B, C) separat durchgeführt wird.

7. Verfahren nach einem der Ansprüche 1 bis 6, **dadurch gekennzeichnet, daß** die Ist- bzw. Soll-Zustandsgrößen Lagewerte und/oder Geschwindigkeitswerte und/oder Kraft-/Momentenwerte umfassen.

8. Verfahren nach einem der Ansprüche 1 bis 7, **dadurch gekennzeichnet, daß** die Stellgrößen als momenten-proportionale Werte erzeugt werden.

9. Vorrichtung zur Steuerung der Bewegung eines Trägers relativ zu einer Basis mit einer Zentralsteuereinheit zur (11) Generierung von Soll-Zustandsgrößen des Trägers in den Koordinaten eines orthogonalen Koordinatensystems (X,Y,Z,A,B,C) der Basis,
Bewegungsvorrichtungen zur Bewegung des Trägers, wobei die Freiheitsgrade der Bewegung ein nicht-orthogonales Koordinatensystem (L₁, L₂, L₃, L₄, L₅, L₆) definieren, und Mittel zur Bestimmung von Ist-Zustandgrößen,
**dadurch gekennzeichnet,**
**daß** zwischen der Zentralsteuereinheit (11) und den Bewegungsvorrichtungen (31, 35) eine Recheneinheit (12) geschaltet ist, die ein Transformationsmodul (17a) zur Transformation von Ist-Zustandsgrößen des Trägers in den nicht-orthogonalen Koordinaten in orthogonale Ist-Koordinaten, eine separate Regelvorrichtung (19) zur Ermittlung von Stellgrößen in orthogonalen Koordinaten aus den Ist- und Soll-Zustandsgrößen in orthogonalen Koordinaten und ein weiteres Transformationsmodul (17b) zur Transformation der Stellgrößen von dem orthogonalen Koordinatensystem auf das nicht-orthogonale Koordinatensystem aufweist.

10. Vorrichtung nach Anspruch 9, **dadurch gekennzeichnet, daß** die Regelvorrichtung (19) für jede Koordinatenrichtung des orthogonalen Koordinatensystems einen eigenen Regler aufweist.

11. Vorrichtung nach Anspruch 9 oder 10, **dadurch gekennzeichnet, daß** ein Antriebsbus-Controller (13) zur Ansteuerung der Bewegungsvorrichtungen (31, 35) vorgesehen ist und die Recheneinheit (12) auf einen Rechnerbus (16) geschaltet ist, der die Zentralsteuereinheit (11) mit dem Antriebsbus-Controller (3) verbindet, zur Steuerung der Übertragung der Ist-Zustandsgrößen und Stellgrößen zwischen der Recheneinheit (12) und den Bewegungsvorrichtungen (31, 35).

12. Vorrichtung nach einem der Ansprüche 9 bis 11, **dadurch gekennzeichnet, daß** die Recheneinheit (12) einen Schnittstellenspeicher (14) zur Aufzeichnung von Ist-Zustandsgrößen in Nicht-Orthogonalkoordinaten, Soll-Zustandsgrößen in Orthogonalkoordinaten und Stellgrößen in Nicht-Orthogonalkoordinaten aufweist.

## Claims

1. A process for moving a supporting beam relative to a base by means of motive devices, the degrees of freedom of movement of which define a non-orthogonal coordinate system, in particular for a machine tool with a machining device on the supporting beam and a workpiece holding fixture on the base, wherein desired state variables pertaining to the movement of the supporting beam are predetermined in coordinates of an orthogonal coordinate system (X, Y, Z, A, B, C) of the base,
actual state variables pertaining to the supporting beam are acquired in the coordinates of the non-orthogonal coordinate system (L₁, L₂, L₃, L₄, L₅, L₆) and transformed onto the orthogonal coordinate system (X, Y, Z, A, B, C),
**characterised in that**
a closed-loop control for ascertaining actuating variables in orthogonal coordinates for the movement of the supporting beam is effected on the basis of the desired and actual state variables, whereby the closed-loop control is implemented in the orthogonal coordinates (X, Y, Z, A, B, C) of the base, and
the actuating variables are subsequently transformed into coordinates of the non-orthogonal coordinate system (L₁, L₂, L₃, L₄, L₅, L₆).

2. Process according to Claim 1, **characterised in that** the actual and desired state variables as well as the actuating variables are written via a common computer bus (16) to addresses of a computing unit (12), in which the actuating variables are ascertained, or are read from said addresses.

3. Process according to Claim 1 or 2, **characterised in that** the actual state variables are acquired and written to an interface memory (15) of a drive-bus controller (13) which controls the motive devices of the supporting beam, and
the actual state variables are transmitted from the interface memory (15) to an interface memory (14) of the computing unit (12).

4. Process according to Claim 3, **characterised in that** on the basis of the state variables which have been saved in the addresses of the interface memory (14) of the computing unit (12) actuating variables are ascertained which are written to further addresses of the interface memory (14), and the actuating variables are transmitted from there to the interface memory (15) of the drive-bus controller (13) for the purpose of driving the motive devices.

5. Process according to one of Claims 1 to 3, **characterised in that** the motive devices (31) are driven from the computing unit (12), and actual state variables are transmitted from the motive devices (31, 35) or from the supporting beam to the computing unit (12) via a ring bus (18', 18'').

6. Process according to one of Claims 1 to 5, **characterised in that** the closed-loop control is implemented separately in each coordinate direction of the orthogonal coordinate system (X, Y, Z, A, B, C).

7. Process according to one of Claims 1 to 6, **characterised in that** the actual or desired state variables comprise position values and/or speed values and/or force/moment values.

8. Process according to one of Claims 1 to 7, **characterised in that** the actuating variables are generated as moment-proportional values.

9. A device for controlling the movement of a supporting beam relative to a base with a central control unit (11) for generating desired state variables pertaining to the supporting beam in the coordinates of an orthogonal coordinate system (X, Y, Z, A, B, C) of the base, motive devices for moving the supporting beam, whereby the degrees of freedom of the motive devices define a non-orthogonal coordinate system (L₁, L₂, L₃, L₄, L₅, L₆), and means for determining actual state variables,
**characterised in that**
a computing unit (12) is connected between the central control unit (11) and the motive devices (31, 35), said computing unit comprising a transformation module (17a) for transforming actual state variables pertaining to the supporting beam in the non-orthogonal coordinates into orthogonal actual coordinates, a separate control device (19) for ascertaining actuating variables in orthogonal coordinates from the actual and desired state variables in orthogonal coordinates and another transformation module (17b) for transforming the actuating variables from the orthogonal coordinate system onto the non-orthogonal coordinate system.

10. Device according to Claim 9, **characterised in that** the control device (19) comprises a separate regulator for each coordinate direction of the orthogonal coordinate system.

11. Device according to Claim 9 or 10, **characterised in that** a drive-bus controller (13) is provided for driving the motive devices (31, 35), and the computing unit (12) is connected to a computer bus (16), which connects the central control unit (11) to the drive-bus controller (3), for the purpose of controlling the transmission of the actual state variables and actuating variables between the computing unit (12) and the motive devices (31, 35).

12. Device according to one of Claims 9 to 11, **characterised in that** the computing unit (12) comprises an interface memory (14) for recording actual state variables in non-orthogonal coordinates, desired state variables in orthogonal coordinates, and actuating variables in non-orthogonal coordinates.

## Revendications

1. Procédé pour déplacer un support par rapport à une base au moyen de dispositifs de déplacement dont les degrés de liberté de déplacement définissent un système de coordonnées non orthogonal, notamment pour une machine-outil comportant un dispositif d'usinage sur le support et un dispositif de réception pour pièce à travailler sur la base, dans lequel on prescrit des grandeurs d'état de consigne du déplacement du support dans des coordonnées d'un système de coordonnées orthogonal (X, Y, Z, A, B, C) de la base, et dans lequel on détecte des grandeurs d'état réelles du support dans les coordonnées du système de coordonnées non orthogonal (L₁, L₂, L₃, L₄, L₅, L₆) et on les transforme dans le système de coordonnées orthogonal (X, Y, Z, A, B, C), **caractérisé en ce qu'**on effectue une régulation pour la détermination de grandeurs réglantes dans des coordonnées orthogonales pour le déplacement du support en fonction des grandeurs d'état de consigne et des grandeurs d'état réelles, la régulation étant effectuée dans les coordonnées orthogonales (X, Y, Z, A, B, C) de la base, et **en ce qu'**on transforme ensuite les grandeurs réglantes en coordonnées du système de coordonnées non orthogonal (L₁, L₂, L₃, L₄, L₅, L₆).

2. Procédé selon la revendication 1, **caractérisé en ce qu'**on écrit ou on lit les grandeurs d'état de consigne et les grandeurs d'état réelles ainsi que les grandeurs réglantes par l'intermédiaire d'un bus informatique commun (16) à des adresses d'une unité de calcul (12) dans laquelle s'effectue la détermination des grandeurs réglantes.

3. Procédé selon la revendication 1 ou 2, **caractérisé en ce qu'**on détecte les grandeurs d'état réelles et on les écrit dans une mémoire d'interface (15) d'un contrôleur de bus d'entraînement (13) qui commande les dispositifs de déplacement du support, et **en ce qu'**on transmet les grandeurs d'état réelles de la mémoire d'interface (15) à une mémoire d'interface (14) de l'unité de calcul (12).

4. Procédé selon la revendication 3, **caractérisé en ce que**, en fonction des grandeurs d'état mémorisées aux adresses de la mémoire d'interface (14) de l'unité de calcul (12), on détermine des grandeurs réglantes qui sont écrites à d'autres adresses de la mémoire d'interface (14) et **en ce qu'**on transmet les grandeurs réglantes de là à la mémoire d'interface (15) du contrôleur de bus d'entraînement (13) en vue de la commande des dispositifs de déplacement.

5. Procédé selon l'une des revendications 1 à 3, **caractérisé en ce que** la commande des dispositifs de déplacement (31) s'effectue par l'unité de calcul (12) et **en ce que** la transmission de grandeurs d'état réelles s'effectue par les dispositifs de déplacement (31, 35) c'est-à-dire par le support vers l'unité de calcul (12) par l'intermédiaire d'un bus en anneau (18', 18").

6. Procédé selon l'une des revendications 1 à 5, **caractérisé en ce qu'**on effectue la régulation séparément dans chaque direction de coordonnée du système de coordonnées orthogonal (X, Y, Z, A, B, C).

7. Procédé selon l'une des revendications 1 à 6, **caractérisé en ce que** les grandeurs d'état réelles ou de consigne comprennent des valeurs de position et/ou des valeurs de vitesse et/ou des valeurs de force/moment.

8. Procédé selon l'une des revendications 1 à 7, **caractérisé en ce qu'**on produit les grandeurs réglantes comme des valeurs proportionnelles au moment.

9. Dispositif pour la commande du déplacement d'un support par rapport à une base, avec une unité de commande centrale (11) pour la production de grandeurs d'état de consigne du support dans les coordonnées d'un système de coordonnées orthogonal (X, Y, Z, A, B, C) de la base, avec des dispositifs de déplacement pour le déplacement du support, les degrés de liberté du déplacement définissant un système de coordonnées non orthogonal (L₁, L₂, L₃, L₄, L₅, L₆), et avec des moyens pour la détermination de grandeurs d'état réelles, **caractérisé en ce qu'**il est branché entre l'unité de commande centrale (11) et les dispositifs de déplacement (31, 35) une unité de calcul (12) qui comporte un module de transformation (17a) pour la transformation de grandeurs d'état réelles du support dans les coordonnées non orthogonales en des coordonnées réelles orthogonales, un dispositif de régulation séparé (19) pour la détermination de grandeurs réglantes en coordonnées orthogonales à partir des grandeurs d'état réelles et des grandeurs d'état de consigne en coordonnées orthogonales et un autre module de transformation (17b) pour la transformation des grandeurs réglantes du système de coordonnées orthogonal dans le système de coordonnées non orthogonal.

10. Dispositif selon la revendication 9, **caractérisé en ce que** le dispositif de régulation (19) comporte un régulateur particulier pour chaque direction de coordonnée du système de coordonnées orthogonal.

11. Dispositif selon la revendication 9 ou 10, **caractérisé en ce qu'**un contrôleur de bus d'entraînement (13) est prévu pour la commande des dispositifs de déplacement (31, 35) et **en ce que** l'unité de calcul (12) est branchée sur un bus informatique (16) qui relie l'unité de commande centrale (11) au contrôleur de bus d'entraînement (3) pour la commande de la transmission des grandeurs d'état réelles et des grandeurs réglantes entre l'unité de calcul (12) et les dispositifs de déplacement (31, 35).

12. Dispositif selon l'une des revendications 9 à 11, **caractérisé en ce que** l'unité de calcul (12) comporte une mémoire d'interface (14) pour enregistrer des grandeurs d'état réelles dans des coordonnées non orthogonales, des grandeurs d'état de consigne dans des coordonnées orthogonales et des grandeurs réglantes dans des coordonnées non orthogonales.
